# EUROPEAN PATENT SPECIFICATION

(11) **EP 1 139 344 B1**
(45) Date of publication and mention of the grant of the patent: **25.08.2004**
(21) Application number: 01105971.4
(22) Date of filing: 10.03.2001
(51) Int. Cl.: G11B 7/007, G11B 7/24, G11B 11/00, G11B 13/00, G11B 20/10, G11B 20/12, G06F 3/06

(54) **Data storage medium having different formats with a common part**
Datenspeichermeidum mit unterschiedlichen Formaten mit einem gemeinsamen Teil
Support de données de formats différents ayant une partie commune

(30) Priority: 25.03.2000 EP 00250101
(43) Date of publication of application: 04.10.2001
(73) Proprietor: DEUTSCHE THOMSON-BRANDT GMBH, 78048 Villingen-Schwenningen (DE)
(72) Inventor: Hütter, Ingo, 30982 Pattensen (DE); Streckenbach, Wulf-Christian, 30966 Hemmingen (DE); Winter, Marco, 30173 Hannover (DE); Böhm, Johannes, 37083 Göttingen (DE); Dorau, Kai, 30966 Hemmingen (DE); Hepper, Dietmar, 30419 Hannover (DE); Spille, Jens, 30966 Hemmingen (DE); Platte, Hans-Joachim, 30966 Hemmingen (DE)
(74) Representative: Hartnack, Wolfgang, Dipl.-Ing.

(56) References cited:
- EP-A- 0 508 762
- EP-A- 0 737 912
- EP-A- 0 936 601

## Description

The invention relates to an optical storage medium on which one part of the set of data is stored in a ROM memory area and another part of the set of data is stored in a RAM memory area, and to a method for processing data on such a storage medium.

### Background

Optical storage media are used as recording media for information, for example for image and sound data or computer programs and application software. The document EP-A-0 309 721 discloses an optical recording medium representing a combination of a read-only CD and a magneto-optical read/write disk. In the case of the known recording medium, the read-only memory area is formed from recesses, so-called pits in a light-reflective aluminium layer. The known storage medium is used for storing maps, for example. For this application instance, it is proposed that non-variable data be stored in the region of the read-only memory area, formed by the recesses, while variable data is arranged in the read/write memory area, which is formed in the magneto-optical disk area.
More advanced optical storage media having a read-only memory area (ROM area) and a read/write memory area (RAM area) are based on DVD technology (digital versatile disc).

EP-A-0737912 discloses a magneto-optical storage medium on which a first part of a set of data is stored in a ROM storage area and another part of the set of data is stored in a RAM storage area. The RAM area contains an address information which upon user request refers to a demo version of a program that is stored in the ROM area. However, upon payment of a fee, the address information is changed so that it refers to the real version of the program being stored also in the ROM area.

### Invention

Optical storage media are usually used to store large volumes of data, for example application software or audio/video data. On account of the complexity and the size of applications today, the need for sufficient storage capacity is continually rising in this area. By way of example, there would be a very large storage requirement if a movie having a plurality of synchronous languages or subtitles containing these languages were to be stored on the optical storage medium. On account of the limited storage space on the storage medium, however, it is usually possible to supply only a few different synchronous languages on the storage medium between which the user of the optical storage medium can choose. In this context, these languages are usually the most widespread languages, such as English, Spanish etc. However, it is only economically worthwhile to produce storage media - for example optical DVD storage media - if sufficiently large numbers are produced. For this reason, it is currently not worth producing DVD storage media containing synchronous languages for relatively small countries.
A similar problem exists if a piece of application software comprising a multiplicity of individual modules for matching individual customer requirements is to be stored on the optical storage medium. Matching the individual customer requirements gives rise to various processing forms for the application software. The limited storage capacity of the storage medium means that modules which are not required sufficiently often by the customers are not supplied on the storage medium, with the result that the number of processing forms is limited.

The problem to be solved by of the invention is to provide a storage medium on which a set of data is stored or can be stored such that it can also be produced economically when there are large volumes of data and complex or rare applications, and also a corresponding method for producing or for writing to such a storage medium.
This problem is solved by the storage medium specified in Claim 1 and by the method specified in Claim 9 or 10.

An essential advantage of the invention is that the storage medium, which is an optical storage medium, for example, and has a set of data stored on it which can be evaluated, for example, by means of a computer device or an audio/video playback device, can be produced in large numbers such that only data from one set of application data is stored on the optical storage medium, said data being required for any type of application for the stored set of application data, irrespective of the specific type of application or processing form. This data not specific to any application type is stored in the read-only memory area. A storage medium holding the data not specific to any application type can be produced economically in mass production in a first step. Data in the set of application data which is specific to one application type can then be stored on the optical storage medium subsequently. This reduces the costs for producing optical storage media with respective applications stored on them.

In one advantageous development of the invention, at least part of the dependent data in the set of data, which dependent data can be used either for the at least partial processing of the set of data in the first processing form or for the at least partial processing of the set of data in the at least one other processing form, is included in the other part of the set of data, which part is stored in the read/write memory area. This makes it possible to modify or to supplement the processing-form-dependent data on the optical storage medium by writing and erasing.

In one embodiment of the invention, which is preferred with regard to optimised interchangeability of the dependent data, the dependent data in the set of data is all included in the other part of the set of data, which is stored in the read/write memory area.

In one advantageous embodiment, the independent data all comprises language-independent data in the set of data, and the dependent data all comprises language-dependent data in the set of data, the language-independent data and the language-dependent data being processed by an evaluation device or handling device such that the first processing form and the at least one other processing form can differ at least in terms of a language used in the context of the respective processing form, which permits economical production of optical storage media of the type on which language-dependent sets of data are stored.

In one development of the invention, which is preferred for the use of the optical storage medium in the area of consumer electronics, the first processing form and the at least one other processing form differ at least in terms of the language or a plurality of languages used in the context of the respective processing form for image or text reproduction and/or sound reproduction. By way of example, the set of data may comprise a movie, with at least some of the dependent data being processed by means of the handling device to produce language-dependent screen subtitles, and it thus being possible to produce a storage medium having a movie stored on it as an economical mass product onto which language-dependent subtitles can be placed later, for example by another company or by a consumer.

In one development of the invention which is expedient for a language-controlled handling device, the first processing form and the at least one other processing form differ at least in terms of the language used in the context of the respective processing form for the handling device's language control.

In connection with the use of the storage medium for storing computer software, the first processing form and the at least one other processing form may advantageously correspond to processing one module combination of an application software product and to processing another module combination of the application software product, which comprises at least part of the first module combination.
In this context, the independent data all comprises module-independent data, in the set of data, which is of the type necessary for processing the first module combination and the other module combination, and the dependent data all comprises module-dependent data, in the set of data, which is of the type necessary for processing the first module combination or for processing the other module combination.

In the context of producing or later modifying the storage medium, the storage medium may be easily matched to various applications if at least some of the dependent data is retrieved from a communication network - for example from the Internet - and is stored on the storage medium.

### Exemplary embodiments

In the context of modern application or evaluation or handling devices, the storage medium is advantageously a DVD or a CD or a Minidisc.
An appropriate optical storage medium, e.g. a RAM/ROM-DVD, is designed to have at least one read-only memory area and at least one read/write memory area.
By way of example, a movie is stored on the storage medium in the form of a set of data. In this case, the set of data comprises language-independent and language-dependent data, the language-dependent data permitting a synchronous language to be output when the movie is played back, so that the movie can be played back in the national language of the particular viewer. In this case, the language-independent data comprises the image data, for example, playback of which is independent of the national language. The language-independent data is stored on the storage medium in the read-only memory area. Part or all of the language-dependent data can be stored in the read/write memory area. If part of the language-dependent data is stored in the read/write area, other language-dependent data is stored in the read-only memory area. When the language-dependent data is split between the read-only memory area and the read/write memory area, the language-dependent data can be sorted according to language, so that the data for some languages is stored in the read-only memory area and the data for other languages is stored in the read/write memory area.
A storage medium configured in this manner allows a producer of the storage medium to write the language-independent data to the read-only memory area. A distributor or the user of the storage medium is subsequently able to store the language-dependent data on the storage medium himself. In this context, a particular user-friendly feature for the user is if the user is able to retrieve the language-dependent data from the Internet and then stores it on the optical storage medium for the purpose of watching the movie later.

The description above related to a storage medium in which a distinction was drawn between language-dependent and language-independent stored data. However, the data stored on the storage medium may also be a set of data which is a software product which can be executed using a computer device. Thus, for example, it may be a word processing program. Generally, such a word processing program comprises a basic module and additional modules, which are used to permit additional functions, such as spelling checks. In such a case, the basic module is preferably stored in the read-only memory area of the storage medium, so that the optical storage medium can be produced with the basic module as part of mass production. Depending on the user requirements, the distributor or the user of the software product can then store at least some additional modules in the read/write memory area. In this case too, provision may be made for the additional modules to be retrieved from the Internet before storage on the storage medium, and for them to be subsequently transferred to the storage medium.

## Claims

1. Storage medium on which a set of data is stored such that at least part of the set of data can be read and processed using a handling device, for example a computer device or a video and/or audio playback device, a first part of the set of data being stored in a read-only memory area and another part of the set of data being stored in a read/write memory area of the storage medium, wherein at least part of the set of data is read by means of the handling device and can be processed in a first processing form, **characterised in that** that part of the set of data can be processed in at least one other processing form, each of which can be selected by means of the handling device,
wherein independent data in the set of data, which independent data can be used both for the at least partial processing of the set of data in the first processing form and for the at least partial processing of the set of data in the at least one other processing form, are being included in the first part of the set of data, which first part is stored in said read-only memory area.

2. Storage medium according to claim 1, in which at least part of the dependent data in the set of data, which dependent data can be used either for the at least partial processing of the set of data in the first processing form or for the at least partial processing of the set of data in the at least one other processing form, is included in the other part of the set of data, which part is stored in the read/write memory area.

3. Storage medium according to claim 2, in which the dependent data in the set of data is all included in the other part of the set of data, which is stored in the read/write memory area.

4. Storage medium according to claim 2 or 3, in which the independent data all comprises language-independent data in the set of data, and the dependent data all comprises language-dependent data in the set of data, the language-independent data and the language-dependent data being processed by the handling device such that the first processing form and the at least one other processing form differ at least in terms of a language used in the context of the respective processing form.

5. Storage medium according to claim 4, in which the first processing form and the at least one other processing form differ at least in terms of the language used or a plurality of the languages used in the context of the respective processing form for image or text reproduction and/or sound reproduction.

6. Storage medium according to claim 5, in which the set of data comprises a movie, with at least some of the dependent data being able to be processed by means of the handling device to produce language-dependent screen subtitles.

7. Storage medium according to one of claims 4 to 6, in which the first processing form and the at least one other processing form differ at least in terms of the language used in the context of the respective processing form for the handling device's language control.

8. Storage medium according to one of claims 2 to 7, in which the first processing form and the at least one other processing form correspond to processing a first module combination of an application software product or to processing another module combination of the application software product, which comprises at least part of the first module combination, and in which the independent data all comprises module-independent data, in the set of data, which is necessary for processing the first module combination and the other module combination, and also the dependent data all comprises module-dependent data, in the set of data, which is necessary for processing the first module combination or for processing the other module combination.

9. Method for processing data on a storage medium on which a set of data is stored such that a first part of the set of data is stored in a read-only memory area and another part of the set of data is stored in a read/write memory area of the storage medium,
wherein at least part of the set of data is read and processed using a handling device, for example a computer device or a video and/or audio playback device, the set of data being processed in a first processing form, **characterised in that** that part of the set of data can be processed in at least one other processing form, each of which can be selected by means of the handling device, wherein independent data in the set of data, which independent data can be used both for the at least partial processing of the set of data in the first processing form and for the at least partial processing of the set of data in the at least one other processing form, are being included in the first part of the set of data, which first part is stored in said read-only memory area.

10. Method for producing a storage medium according to one of claims 1 to 9, in which independent and dependent data in a set of data are stored on the optical storage medium, at least some of the dependent data being retrieved from a communication network and subsequently being stored on the optical storage medium.

11. Storage medium according to one of claims 1 to 8 or method according to claim 9 or 10, the storage medium being an optical storage medium, for example a DVD or a CD or a Minidisc.

## Patentansprüche

1. Speichermedium, auf dem eine Gruppe von Daten so gespeichert wird, dass wenigstens ein Teil der Datengruppe unter Verwendung einer Handhabungsvorrichtung, z.B. einer Computer-Vorrichtung oder einer Video- und/oder Audio-Wiedergabevorrichtung gelesen und verarbeitet werden kann, wobei ein erster Teil der Datengruppe in einem Nur-Lese-Speicherbereich und ein anderer Teil der Datengruppe in einem Lese/Schreib-Speicherbereich des Speichermediums gespeichert wird, wobei wenigstens ein Teil der Datengruppe mittels der Handhabungsvorrichtung gelesen wird und in einer ersten Verarbeitungsform verarbeitet werden kann, **dadurch gekennzeichnet, dass** ein Teil der Datengruppe in wenigstens einer anderen Verarbeitungsform verarbeitet werden kann, von denen jede mittels der Handhabungsvorrichtung ausgewählt werden kann, wobei unabhängige Daten in der Datengruppe, die sowohl für die wenigstens teilweise Verarbeitung der Datengruppe in der ersten Verarbeitungsform und für die wenigstens teilweise Verarbeitung der Datengruppe in der wenigstens einen anderen Verarbeitungsform verwendet werden können, in dem ersten Teil der Datengruppe enthalten sind, der in dem Nur-Lese-Speicherbereich gespeichert wird.

2. Speichermedium nach Anspruch 1, bei dem wenigstens ein Teil der abhängigen Daten in der Datengruppe, die entweder für die wenigstens teilweise Verarbeitung der Datengruppe in der ersten Verarbeitungsform oder für die wenigstens teilweise Verarbeitung der Datengruppe in der wenigstens einen anderen Verarbeitungsform verwendet werden können, in dem anderen Teil der Datengruppe enthalten ist, der in dem Lese/Schreib-Speicherbereich gespeichert ist.

3. Speichermedium nach Anspruch 2, bei dem die abhängigen Daten in der Datengruppe alle in dem anderen Teil der Datengruppe enthalten sind, der in dem Lese/Schreib-Speicherbereich gespeichert ist.

4. Speichermedium nach Anspruch 2 oder 3, bei dem alle unabhängigen Daten sprachenunabhängige Daten in der Datengruppe umfassen, und alle abhängigen Daten sprachenabhängige Daten in der Datengruppe umfassen, wobei die sprachenunabhängigen Daten und die sprachenabhängigen Daten durch die Handhabungsvorrichtung so verarbeitet werden, dass die erste Verarbeitungsform und die wenigstens eine andere Verarbeitungsform sich wenigstens in Form einer im Zusammenhang der entsprechenden Verarbeitungsform verwendeten Sprache unterscheiden.

5. Speichermedium nach Anspruch 4, bei dem die erste Verarbeitungsform und die wenigstens eine andere Verarbeitungsform sich wenigstens in Form der im Zusammenhang mit der entsprechenden Verarbeitungsform für Bild- oder Text-Wiedergabe und/oder Ton-Wiedergabe verwendeten Sprache oder einer Mehrzahl von verwendeten Sprachen unterscheidet.

6. Speichermedium nach Anspruch 5, bei dem die Datengruppe einen Film umfasst, wobei wenigstens einige der abhängigen Daten mittels der Handhabungsvorrichtung verarbeitet werden können, um sprachenabhängige Bildschirm-Untertitel zu erzeugen.

7. Speichermedium nach einem der Ansprüche 4 bis 6, bei dem die erste Verarbeitungsform und die wenigstens eine andere Verarbeitungsform sich wenigstens in Form der Sprache unterscheiden, die im Zusammenhang mit der entsprechenden Verarbeitungsform für die Sprachensteuerung der Handhabungsvorrichtung verwendet wird.

8. Speichermedium nach einem der Ansprüche 2 bis 7, bei dem die erste Verarbeitungsform und die wenigstens eine andere Verarbeitungsform der Verarbeitung einer ersten Modul-Kombination eines Anwendungs-Software-Produkts oder der Verarbeitung einer anderen Modul-Kombination des Anwendungs-Software-Produkts entsprechen, das wenigstens einen Teil der ersten Modul-Kombination umfasst, und bei dem alle unabhängigen Daten Modul-unabhängige Daten in der Datengruppe umfassen, was für die Verarbeitung der ersten Modul-Kombination und der anderen Modul-Kombination notwendig ist, und auch alle abhängigen Daten Modulabhängige Daten in der Datengruppe umfassen, was für die Verarbeitung der ersten Modul-Kombination oder für die Verarbeitung der anderen Modul-Kombination notwendit ist.

9. Verfahren zur Verarbeitung von Daten auf einem Speichermedium, auf dem eine Gruppe von Daten so gespeichert wird, dass ein erster Teil der Datengruppe in einem Nurlese-Speicherbereich und ein anderer Teil der Datengruppe in einem Lese/Schreib-Speicherbereich des Speichermediums gespeichert wird, wobei wenigstens ein Teil der Datengruppe unter Verwendung einer Handhabungsvorrichtung, z.B. einer Computer-Vorrichtung oder einer Videound/oder Audio-Wiedergabevorrichtung gelesen und verarbeitet wird, wobei die Datengruppe in einer ersten Verarbeitungsform verarbeitet wird, **dadurch gekennzeichnet, dass** der Teil der Datengruppe in wenigstens einer anderen Verarbeitungsform verarbeitet werden kann, von denen jede mittels der Handhabungsvorrichtung ausgewählt werden kann, wobei unabhängige Daten in der Datengruppe, die sowohl für die wenigstens teilweise Verarbeitung der Datengruppe in der ersten Verarbeitungsform und für die wenigstens teilweise Verarbeitung der Datengruppe in der wenigstens einen anderen Verarbeitungsform in dem ersten Teil der Datengruppe enthalten sind, der in dem Nur-Lese-Speicherbereich gespeichert ist.

10. Verfahren zur Erzeugung eines Speichermediums nach einem der Ansprüche 1 bis 9, bei dem unabhängige und abhängige Daten in einer Gruppe von Daten in dem optischen Speichermedium gespeichert werden, wobei wenigstens einige der abhängigen Daten aus einem Kommunikations-Netzwerk wiedergewonnen und anschließend in dem optischen Speichermedium gespeichert werden.

11. Speichermedium nach einem der Ansprüche 1 bis 8 oder Verfahren nach Anspruch 9 oder 10, wobei das Speichermedium ein optisches Speichermedium ist, z.B. eine DVD oder eine CD oder eine Mini-Disc.

## Revendications

1. Support de mémoire sur lequel un ensemble de données est enregistré de façon telle qu'au moins une partie de l'ensemble de données puisse être lue et traitée en utilisant un dispositif de gestion, par exemple un ordinateur ou un dispositif de lecture vidéo et/ou audio, une première partie de l'ensemble de données étant enregistrée dans une zone de mémoire morte et une autre partie de l'ensemble de données étant enregistrée dans une autre zone de mémoire lisible/inscriptible du support de mémoire, dans lequel au moins une partie de l'ensemble de données est lue au moyen du dispositif de gestion et peut être traitée selon une première forme de traitement, **caractérisé en ce que** cette partie de l'ensemble de données peut être traitée selon au moins une autre forme de traitement, chacune des formes de traitement pouvant être sélectionnée au moyen du dispositif de gestion,
dans lequel les données indépendantes de l'ensemble données, lesquelles données indépendantes peuvent être utilisées à la fois pour le traitement au moins partiel de l'ensemble de données selon la première forme de traitement et pour le traitement au moins partiel de l'ensemble de données selon au moins une autre forme de traitement, sont incluses dans la première partie de l'ensemble de données, laquelle première partie est enregistrée dans ladite zone de mémoire morte.

2. Support de mémoire selon la revendication 1, dans lequel au moins une partie des données dépendantes de l'ensemble de données , lesquelles données dépendantes peuvent être utilisées soit pour le traitement au moins partiel de l'ensemble de données selon la première forme de traitement soit pour le traitement au moins partiel de l'ensemble de données selon au moins une autre forme de traitement, est incluse dans l'autre partie de l'ensemble de données , laquelle partie est enregistrée dans la zone de mémoire lisible/inscriptible.

3. Support de mémoire selon la revendication 2, dans lequel les données dépendantes de l'ensemble de données sont toutes incluses dans l'autre partie de l'ensemble de données qui est enregistrée dans la zone de mémoire lisible/inscriptible.

4. Support de mémoire selon la revendication 2 ou 3, dans lequel les données indépendantes comportent toutes des donnés indépendantes de la langue de l'ensemble de données et les données dépendantes comportent toutes des données dépendantes de la langue de l'ensemble de données, les données indépendantes et dépendantes de la langue étant traitées par le dispositif de gestion de telle façon que la première forme de traitement et au moins l'autre forme de traitement diffèrent en termes de la langue utilisée dans le contexte de la forme de traitement respective.

5. Support de mémoire selon la revendication 4, dans lequel la première forme de traitement et au moins l'autre forme de traitement diffèrent au moins en termes de la langue ou de la pluralité de langues utilisée dans le contexte de la forme respective de traitement pour la reproduction des images, du texte et/ou du son.

6. Support de mémoire selon la revendication 5, dans lequel l'ensemble de données comporte un film, au moins certaines des données dépendantes pouvant être traitées au moyen du dispositif de gestion pour générer sur l'écran des sous-titres dépendant de la langue.

7. Support de mémoire selon la revendication 4 ou 6, dans lequel la première forme de traitement et au moins l'autre forme de traitement diffèrent au moins en termes de la langue utilisée dans le contexte de la forme respective de traitement pour la commande de la langue dans le dispositif de gestion.

8. Support de mémoire selon l'une des revendications 2 à 7, dans lequel la première forme de traitement et au moins l'autre forme de traitement correspondent au traitement d'une première combinaison de modules d'un produit logiciel d'application ou au traitement d'une autre combinaison de modules du produit logiciel d'application qui comporte au moins une partie de la première combinaison de modules et dans lequel les données indépendantes comportent toutes des donnés indépendantes des modules de l'ensemble de données qui sont nécessaires au traitement de la première combinaison de modules et de l'autre combinaison de modules, et également les données dépendantes comprennent toutes des données dépendantes des modules de l'ensemble de données qui sont nécessaires au traitement de la première combinaison de modules ou au traitement de l'autre combinaison de modules.

9. Procédé de traitement de données sur un support de mémoire sur lequel un ensemble de données est enregistré de telle façon qu'une première partie de l'ensemble de données soit enregistrée dans une zone de mémoire morte et une autre partie de l'ensemble de données soit enregistrée dans une zone de mémoire lisible/inscriptible du support de mémoire,
dans lequel au moins une partie de l'ensemble de données est lue et traitée en utilisant un système de gestion, par exemple un ordinateur ou un dispositif de lecture vidéo et/ou audio, l'ensemble de données étant traité selon une première forme de traitement, **caractérisé en ce que** cette partie de l'ensemble de données peut être traitée selon au moins une autre forme de traitement, chacune des formes pouvant être sélectionnée au moyen du dispositif de gestion, dans lequel les données indépendantes de l'ensemble de données, lesquelles données indépendantes de l'ensemble de données peuvent être utilisées à la fois pour au moins le traitement partiel de l'ensemble de données selon la première forme de traitement et pour au moins le traitement partiel de l'ensemble de données selon au moins une autre forme de traitement, sont incluses dans la première partie de l'ensemble de données, laquelle première partie est enregistrée dans ladite zone de mémoire morte.

10. Procédé de production d'un support de mémoire selon l'une des revendications 1 à 9, dans lequel des données indépendantes et dépendantes d'un ensemble de données sont enregistrées sur le support de mémoire optique, au moins certaines de données dépendantes étant extraites d'un réseau de communication et par la suite enregistrées sur le support de mémoire optique.

11. Support de mémoire selon l'une des revendications 1 à 8, ou procédé selon la revendication 9 ou 10, le support de mémoire étant un support de mémoire optique, par exemple, un disque DVD ou CD ou un minidisque.
